# EUROPÄISCHE PATENTANMELDUNG

(11) **EP 0 791 422 A1**
(43) Veröffentlichungstag der Anmeldung: **27.08.1997**
(21) Anmeldenummer: 96119840.5
(22) Anmeldetag: 11.12.1996
(51) Int. Cl.: B23B 31/12

(54) **Bohrfutter**

(30) Priorität: 23.02.1996 DE 19606795
(71) Anmelder: Metabowerke GmbH & Co., D-72622 Nürtingen (DE)
(72) Erfinder: Deuschle, Heinz, 72644 Oberboihingen (DE); Schulz, Manfred, Dipl.-Ing., 72622 Nürtingen (DE)
(74) Vertreter: Dreiss, Fuhlendorf, Steimle & Becker, Patentanwälte

(57) **Zusammenfassung**

Die Erfindung betrifft ein Bohrfutter mit in zueinander geneigten Öffnungen (6) in einem Futterkörper (4) geführten Spannbacken (8), die über eine manuell drehbare Spannhülse (10) mit einem Gewinde (12) verstellbar sind, und mit einer axial verschiebbaren und gegenüber dem Futterkörper (4) begrenzt verdrehbaren Sperrhülse (16), die durch Verschieben in ihre eine axiale Endposition mit der Spannhülse (10) kuppelbar ist, und mit einer zwischen dem Futterkörper (4) und der Sperrhülse (16) in Umfangsrichtung wirkenden Feder (38), welche die Sperrhülse (16) gegenüber dem Futterkörper (4) in der Schließrichtung der Spannhülse entsprechender Richtung vorspannt; um die Lebensdauer des Bohrfutters zu erhöhen, wird dieses erfindungsgemäß so ausgebildet, daß das sperrhülsenseitige Ende der Feder (38) an einer den Schaft (34) des Futterkörpers (4) umgebenden platten- oder tellerförmigen Stellscheibe (20) angeordnet ist, die formschlüssig mit der Sperrhülse (16) in Drehmitnahme steht und auf der die Sperrhülse (16) axial verschieblich ist, und daß zur Drehbegrenzung der Sperrhülse (16) gegenüber dem Futterkörper (4) ein zwischen der Mantelfläche des Schafts (34) des Futterkörpers (4) und der Stellscheibe (20) wirkender und durch zwei Anschläge (52, 54) begrenzter Nocken (48) vorgesehen ist.

## Beschreibung

Die Erfindung betrifft ein Bohrfutter mit in zueinander geneigten Öffnungen in einem Futterkörper geführten Spannbacken, die über eine manuell drehbare Spannhülse mit einem Gewinde verstellbar sind, und mit einer axial verschiebbaren und gegenüber dem Futterkörper begrenzt verdrehbaren Sperrhülse, die durch Verschieben in ihre eine axiale Endposition mit der Spannhülse kuppelbar ist, und mit einer zwischen dem Futterkörper und der Sperrhülse in Umfangsrichtung wirkenden Feder, welche die Sperrhülse gegenüber dem Futterkörper in der Schließrichtung der Spannhülse entsprechendder Richtung vorspannt.

Bei einem derartigen "schlüssellosen" Bohrfutter werden die Spannbacken nicht unter Zuhilfenahme eines am Bohrfutter ansetzbaren Spannschlüssels, sondern durch Verdrehen der erwähnten, den Futterkörper koaxial umgebenden Spannhülse in feste Anlage an einen in das Bohrfutter eingesetzten Bohrer gebracht. Währenddessen wird die Bohrmaschine bzw. das Bohrfutter an der Sperrhülse gehalten. Beim Festdrehen der Spannhülse wird die Feder durch begrenzte Verdrehung der Sperrhülse gegenüber dem Futterkörper in der erwähnten Schließrichtung vorgespannt und in diesem vorgespannten Zustand mit der Spannhülse gekuppelt, so daß auf die Spannhülse ein in Schließ- bzw. Spannrichtung wirkendes Drehmoment bezüglich der Längsachse des Futterkörpers ausgeübt wird.

Ein derartiges Bohrfutter ist aus der DE 42 38 465 C1 bekannt. Bei diesem Bohrfutter ist eine zwischen dem Futterkörper und der Sperrhülse in Umfangsrichtung wirkende Feder einerseits an der aus Kunststoff bestehenden Sperrhülse und andererseits an einem drehfest auf dem Futterkörper sitzenden Ring befestigt. Die Drehbegrenzung der Sperrhülse gegenüber dem Futterkörper wird von radial vom Futterkörper abstehenden Nocken erreicht, die in eine radiale und in Umfangsrichtung erstreckte als Steuerausnehmung bezeichnete Nut in der Innenseite der Sperrhülse eingreifen.

Das bekannte Bohrfutter eignet sich jedoch nicht für einen dauerhaften Einsatz, da seine Lebensdauer nur sehr begrenzt ist. Das sperrhülsenseitige Federlager sowie die Drehbegrenzungsanschläge werden von der aus Kunststoff bestehenden Sperrhülse gebildet, und es tritt daher durch die kraftvolle Einwirkung der metallischen Feder sowie die hohe Kraftübermittlung beim Anschlagen der Nocken in den Steuerausnehmungen ein starker Verschleiß auf.

Der vorliegenden Erfindung liegt daher die Aufgabe zugrunde, ein Bohrfutter der beschriebenen Art so zu verbessern, daß es eine höhere Lebensdauer als bekannte Bohrfutter aufweist und auf einfache Weise zerlegbar bzw. montierbar ist, aber dennoch auf wirtschaftliche Weise herstellbar und wenigstens so bedienungsfreundlich wie bekannte Bohrfutter ist.

Diese Aufgabe wird bei einem Bohrfutter der erwähnten Art erfindungsgemäß dadurch gelöst, daß das sperrhülsenseitige Ende der Feder an einer den Schaft des Futterkörpers umgebenden platten- oder tellerförmigen Stellscheibe angeordnet ist, die formschlüssig mit der Sperrhülse in Drehmitnahme steht und auf der die Sperrhülse axial verschieblich ist, und daß zur Drehbegrenzung der Sperrhülse gegenüber dem Futterkörper ein zwischen der Mantelfläche des Schafts des Futterkörpers und der Stellscheibe wirkender und durch zwei Anschläge begrenzter Nocken vorgesehen ist.

Durch die erfindungsgemäße Anordnung der Feder ist es nunmehr möglich, das Federlager verschleißärmer auszubilden, indem die Stellscheibe aus Metall oder einem sonstigen gegenüber dem Kunststoffwerkstoff der Sperrhülse härteren Werkstoff gefertigt wird. Auch die Drehbegrenzung der mit der Sperrhülse in Drehmitnahme stehenden Stellscheibe gegenüber dem Futterkörper kann praktisch verschleißfrei ausgebildet werden. Die Montage des erfindungsgemäßen Bohrfutters ist aufgrund der besseren Zugänglichkeit vereinfacht. Während bei dem Bohrfutter nach der DE 42 38 465 C1 die Feder einerseits am Futterkörper bzw. an dem mit dem Futterkörper drehfesten Ring und andererseits an der Innenseite der Sperrhülse befestigt werden mußte, kann die Feder nunmehr zuerst zwischen dem Futterkörper und der Stellscheibe montiert werden und anschließend braucht die Sperrhülse lediglich in ihren drehfesten Sitz über die Stellscheibe geschoben zu werden.

Auch aus der DE 42 38 464 C1 ist ein Bohrfutter bekannt, bei dem jedoch die Drehbegrenzung von einem in eine Steuerausnehmung der aus Kunststoff bestehenden Sperrhülse eingreifenden Nocken gebildet ist. Bei diesem Bohrfutter ist zwar die Feder Zwischen einem Sperring 8 und einem gegenüber diesem begrenzt verdrehbaren Zahnring 15 angeordnet, wobei der Zahnring 15 seinerseits mit einer Gegenverzahnung der Sperrhülse 9 kuppelbar ist. Der erwähnte Sperring 8 ist jedoch mit einem die Spannbacken lagernden Backenführungsteil 2 drehfest verbunden und mit diesem gegenüber dem Futterkörper 7 verdrehbar, und der Zahnring 15 steht nur in seiner gekuppelten Stellung in Drehmitnahme mit der äußeren Sperrhülse. Der Aufbau dieses Bohrfutters unterscheidet sich daher grundsätzlich von dem erfindungsgemäßen Bohrfutter.

Aus der DE 42 38 461 C1 und der DE 42 38 503 C1 sind weitere gattungsgemäße Bohrfutter bekannt, deren zwischen Futterkörper und Sperrhülse wirkende Feder jedoch unmittelbar an der Sperrhülse gehalten ist.

Bei einer bevorzugten Ausführungsform der Erfindung ist der die Drehbegrenzung bildende, zwischen dem Futterkörper und der Stellscheibe wirkende Nocken drehfest mit der Mantelfläche des Futterkörpers vorgesehen und greift in eine an ihrer inneren Öffnung randoffene Aussparung der Stellscheibe ein, wobei die Begrenzung der Aussparung in Umfangsrichtung die zwei Anschläge bildet. Nocken und Anschläge sind daher gegenüber der bekannten Ausführungsform weiter in Richtung auf das Zentrum des Bohrfutters verlegt, wodurch erwünschtenfalls der Durchmesser des Bohrfutters verringert werden könnte oder eine größere Wandstärke im Bereich der Sperrhülse vorgesehen werden könnte.

In Weiterbildung dieses Erfindungsgedankens ist in der Mantelfläche des Futterkörpers eine in axialer Richtung verlaufende randoffene Nut ausgebildet, in welche ein Stift zur Bildung des Nockens einsetzbar ist, der im eingesetzten Zustand über die Mantelfläche des Futterkörpers in radialer Richtung vorsteht. Die Herstellung bzw. Bearbeitung des Futterkörpers ist hierdurch stark vereinfacht, da zur Ausbildung des die Drehbegrenzung bewirkenden Nockens lediglich eine Längsnut in die Mantelfläche des Futterkörpers eingefräst zu werden braucht, oder es wird vor einer Drehbearbeitung des Futterkörpers eine Längsbohrung eingebracht und anschließend die Wand des Futterkörpers abgedreht.

Bei dem erfindungsgemäßen Bohrfutter könnte das futterkörperseitige Ende der Feder an einem am Futterkörper angebrachten Vorsprung, einem Hintergriff oder dergleichen angebracht sein; es wird jedoch im Hinblick auf einfache und kostengünstige Herstellbarkeit und Montierbarkeit eine Ausführungsform bevorzugt, bei der das futterkörperseitige Ende der Feder an einer mit dem Futterkörper drehfesten Ringscheibe angeordnet ist, die etwa an einem ringflanschartigen Abschnitt des Futterkörpers abgestützt und in beliebiger Weise drehfest mit diesem verbunden ist.

In weiterer Ausbildung der Erfindung weist die das Widerlager für das futterkörperseitige Ende der Feder bildende Ringscheibe eine zu ihrer inneren Öffnung randoffene Aussparung auf, in die der vorstehend erwähnte Nocken im wesentlichen spielfrei eingreift und dadurch eine drehfeste Kopplung zwischen der Ringscheibe und dem Futterkörper bewirkt. Es kann also durch ein- und denselben Nocken sowohl eine drehfeste Kopplung zwischen Futterkörper und Ringscheibe als auch eine Drehbegrenzung zwischen Futterkörper und Sperrhülse bzw. Stellscheibe erreicht werden.

Zur Ausbildung des Widerlagers für das futterkörperseitige Ende der Feder weist die Ringscheibe vorteilhafterweise eine in axialer Richtung abgebogene Lasche auf. In entsprechender Weise kann die Stellscheibe eine in axialer Richtung abgebogene Lasche zur Ausbildung des anderen, sperrhülsenseitigen Endes der Feder aufweisen.

Zur Ausbildung der Drehmitnahme zwischen Stellscheibe und Sperrhülse ist die Stellscheibe vorteilhafterweise an wenigstens einer Stelle in radialer Richtung nach innen abgeflacht, und die Sperrhülse weist an ihrer Innenseite eine komplementär hierzu ausgeformte Gegenfläche auf. Hierdurch läßt sich eine in Umfangsrichtung formschlüssige Drehmitnahme erreichen, ohne daß weitere Kopplungselemente angewandt werden müßten. Es ist jedoch auch denkbar und kann sich im Hinblick auf eine leichte axiale Verschiebbarkeit der Sperrhülse als vorteilhaft erweisen, wenn in der abgeflachten Randseite der Stellscheibe eine randoffene und in axialer Richtung verlaufende Aussparung ausgebildet ist, in welche ein in der Gegenfläche der Sperrhülse gelagerter Mitnahmestift eingreift.

Die Stellscheibe kann zu ihrer eigenen Verstärkung und Versteifung einen flanschartig in axialer Richtung abgebogenen Randbereich aufweisen. Sie besteht vorzugsweise aus einem gegenüber Kunststoff hartem Material, wie Metall oder einem Sinterwerkstoff oder eventuell Keramik.

Nach einer weiteren bevorzugten Ausführungsform der Erfindung ist die Sperrhülse in wenigstens einer ihrer axialen Endpositionen verrastbar. Hierbei hat es sich als vorteilhaft erwiesen, wenn die Stellscheibe, insbesondere der flanschartig in axialer Richtung abgebogene Randbereich der Stellscheibe, Anschlagflächen bzw. Aufgleitflächen für eine in der Wandung der Sperrhülse federnd vorgespannte Kugelraste aufweist.

Weitere Merkmale, Einzelheiten und Vorteile der Erfindung ergeben sich aus der zeichnerischen Darstellung und nachfolgenden Beschreibung einer vorteilhaften Ausführungsform der Erfindung. In der Zeichnung zeigt:
- Figur 1: einen Längsschnitt durch ein erfindungsgemäß ausgebildetes Bohrfutter mit einem separat dargestellten Detail, welches in dem Längsschnitt des Bohrfutters nicht dargestellt ist;
- Figur 2a: eine Draufsicht auf die Stellscheibe des Bohrfutters nach Figur 1;
- Figur 2b: einen Schnitt entlang der Linie b-b in Figur 2a; und
- Figur 2c: einen Schnitt entlang der Linie c-c in Figur 2a.

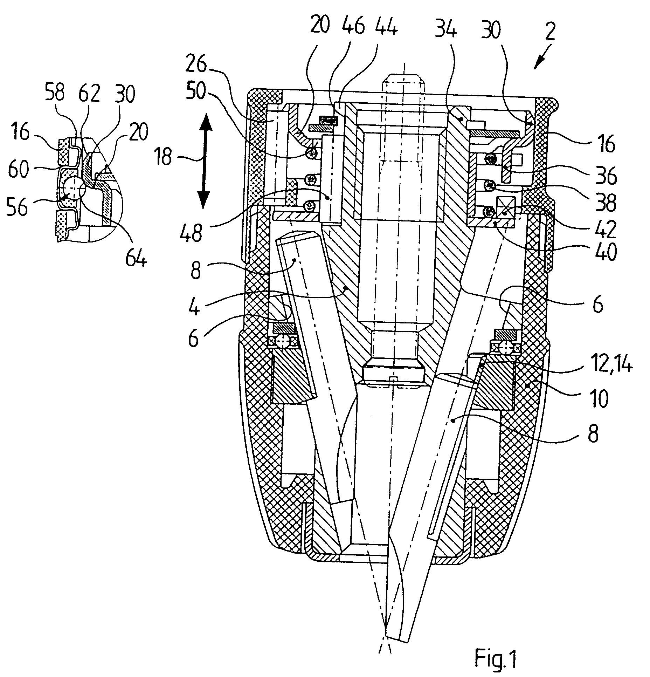

Figur 1 zeigt ein insgesamt mit dem Bezugszeichen 2 bezeichnetes Bohrfutter mit einem Futterkörper 4, in dem zueinander geneigte Öffnungen 6 zur verschieblichen Aufnahme von Spannbacken 8 ausgebildet sind. Die Spannbacken 8 werden innerhalb ihrer jeweiligen Öffnung 6 durch Drehung einer äußeren Spannhülse 10 mit einem Gewindeabschnitt 12, in welches eine jeweilige Zahnung 14 an der Spannbacke 8 eingreift, verstellt.

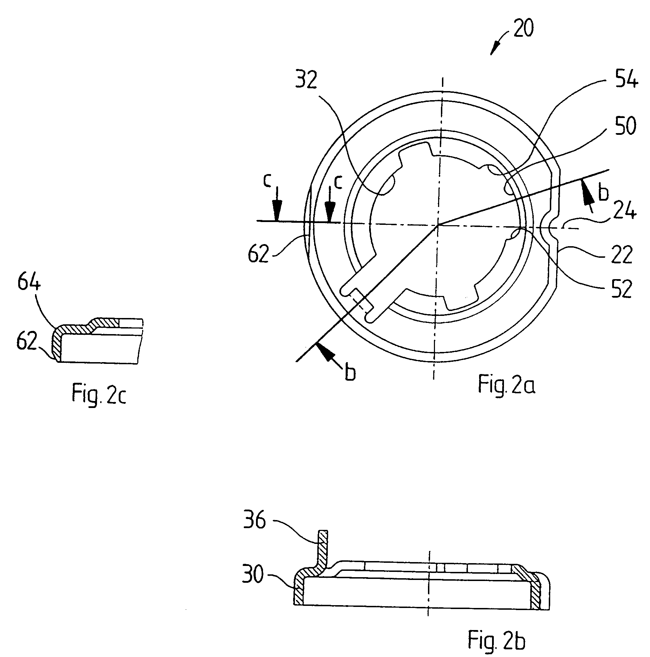

Desweiteren ist eine Sperrhülse 16 vorgesehen, welche in axialer Richtung 18 bezüglich dem Futterkörper 4 verschiebbar und in ihrer einen in der Figur 1 dargestellten axialen Endposition mit der Spannhülse 10 drehfest gekuppelt ist. Die Sperrhülse 16 steht in Drehmitnahme mit einer Stellscheibe 20, die in verschiedenen Ansichten in den Figuren 2a, b und c dargestellt ist. Die Drehmitnahme zwischen der Stellscheibe 20 und der Sperrhülse 16 wird über eine radiale Abflachung 22 der Stellscheibe 20 und eine in Längsrichtung verlaufende Nut 24 in dem abgeflachten Randbereich sowie durch einen in die Nut 24 eingreifenden und in der Sperrhülse 16 gelagerten Stift 26 erreicht. Die Sperrhülse 16 ist jedoch gegenüber der Stellscheibe 20 in axialer Richtung verschiebbar. Die Stellscheibe 20 weist einen in der Figur 1 flanschartig nach oben gebogenen Randbereich 30 auf, wodurch die Stellscheibe einerseits versteift wird und andererseits eine größere axiale Abmessung erhält. Sie ist mit einer zentralen Öffnung 32 über einen bohrspindelseitigen Schaftabschnitt 34 des Futterkörpers 4 gestülpt. Sie weist ferner eine freigestanzte oder freigenibbelte Lasche 36 auf, die in der Figur 1 nach unten aus der Ebene der Stellscheibe 20 abgebogen ist. Diese Lasche 36 bildet ein Widerlager für ein sperrhülsenseitiges Ende einer Feder 38, die ebenfalls über den Schaftabschnitt 34 gestülpt ist und gegen eine mit dem Futterkörper 4 drehfeste Ringscheibe 40 abgestützt ist. Diese Ringscheibe 40 weist eine entsprechende, in axialer Richtung abgebogene Lasche 42 zur Bildung eines Widerlagers für das andere futterkörperseitige Ende der schraubenförmigen Feder 38 auf. Die Feder 38 ist vorzugsweise stets in der Weise vorgespannt, daß auf die Stellscheibe 20 ein Drehmoment bezüglich der Längsachse des Futterkörpers 4 ausgeübt wird, das in dieselbe Richtung weist, wie ein beim Spannen bzw. Schließen der Spannhülse 10 auftretendes Drehmoment.

Beim Einspannen eines in der Zeichnung nicht dargestellten Bohrers wird die Bohrmaschine an der Sperrhülse 16 gehalten und die Spannhülse 10 wird in Schließrichtung gedreht, wobei sich die Spannbacken 8 in der Figur 1 nach unten bewegen. Sobald die Spannbacken 8 den nicht dargestellten Bohrer fest umschließen, wird der Futterkörper 4 in der Schließrichtung der Spannhülse 10 mitgedreht. Da die das futterkörperseitige Federlager bildende Ringscheibe 40 über einen in eine Nut 44 in der Mantelfläche 46 des Schaftabschnitts 34 eingesetzten Stift oder Nocken 48 drehfest mit dem Futterkörper 4 verbunden ist, wird auch sie mitgedreht. Dabei wird unter Vermittlung der Lasche 42 die Feder 38 in der Schließrichtung der Spannhülse 10 gespannt. Der Stift oder Nocken 48 steht über die Mantelfläche 46 des Schaftabschnitts 34 vor und greift in eine zu der zentralen Öffnung 32 randoffene Aussparung 50 in der Stellscheibe 20 ein. Die in Umfangsrichtung liegende Begrenzung der Aussparung 50 bildet Anschläge 52, 54 für den Stift oder Nocken 48 und bewirkt so eine Drehbegrenzung des Futterkörpers 4 gegenüber der Stellscheibe 20 und der Sperrhülse 16. Wenn der Stift 48 an den Anschlag 54 anschlägt und somit die weitere Verdrehung von Futterkörper 4 gegenüber der Stellscheibe 20 begrenzt, wird die Sperrhülse 16 in axialer Richtung nach vorn geschoben und dabei drehfest mit der Spannhülse 10 gekuppelt. In dieser Endstellung ist dann die Bohrmaschine betriebsbereit. Unter Vermittlung der Ringscheibe 40, der Feder 38 und der Stellscheibe 20 wird die Sperrhülse 16 gegenüber dem Futterkörper 4 in Spannrichtung vorgespannt und überträgt dieses Drehmoment auf die Spannhülse 10, so daß beim Schlagbohrbetrieb auftretende Lockerungen der Spannbacken 8 nachgestellt werden.

Schließlich zeigt das Detail der Figur 1 einen Ausschnitt aus der Sperrhülse 16 mit einer gegen den flanschartig abgebogenen Randbereich 30 der Stellscheibe 20 wirkenden Kugelraste 56. Die Kugelraste 56 ist von einem Federelement 58 gehalten, das in eine Öffnung 60 in der Sperrhülse 16 eingesetzt ist und die Kugelraste 56 in radialer Richtung nach innen vorspannt. Der Randbereich 30 der Stellscheibe 20 bildet Anschlag- bzw. Aufgleitflächen 62 und 64 für die Kugelraste 56. Hierfür ist der flanschartige Randbereich 30 der Stellscheibe 20 an seiner äußeren Kante wenigstens abschnittsweise abgeflacht, um die von der Spannhülse 10 abgewandte axiale Endposition der Sperrhülse 16 zu definieren.

## Patentansprüche

1. Bohrfutter mit in zueinander geneigten Öffnungen (6) in einem Futterkörper (4) geführten Spannbacken (8), die über eine manuell drehbare Spannhülse (10) mit einem Gewinde (12) verstellbar sind, und mit einer axial verschiebbaren und gegenüber dem Futterkörper (4) begrenzt verdrehbaren Sperrhülse (16), die durch Verschieben in ihre eine axiale Endposition mit der Spannhülse (10) kuppelbar ist, und mit einer zwischen dem Futterkörper (4) und der Sperrhülse (16) in Umfangsrichtung wirkenden Feder (38), welche die Sperrhülse (16) gegenüber dem Futterkörper (4) in der Schließrichtung der Spannhülse entsprechender Richtung vorspannt, **dadurch gekennzeichnet**, daß das sperrhülsenseitige Ende der Feder (38) an einer den Schaft (34) des Futterkörpers (4) umgebenden platten- oder tellerförmigen Stellscheibe (20) angeordnet ist, die formschlüssig mit der Sperrhülse (16) in Drehmitnahme steht und auf der die Sperrhülse (16) axial verschieblich ist, und daß zur Drehbegrenzung der Sperrhülse (16) gegenüber dem Futterkörper (4) ein zwischen der Mantelfläche des Schafts (34) des Futterkörpers (4) und der Stellscheibe (20) wirkender und durch zwei Anschläge (52, 54) begrenzter Nocken (48) vorgesehen ist.

2. Bohrfutter nach Anspruch 1, dadurch gekennzeichnet, daß der zwischen dem Futterkörper (4) und der Stellscheibe (20) wirkende Nocken (48) drehfest mit der Mantelfläche des Futterkörpers (4) vorgesehen ist und in eine an ihrer inneren Öffnung (32) randoffene Aussparung (50) der Stellscheibe (50) eingreift, wobei die Begrenzung der Aussparung (50) in Umfangsrichtung die zwei Anschläge (52, 54) bildet.

3. Bohrfutter nach Anspruch 2, dadurch gekennzeichnet, daß in der Mantelfläche des Futterkörpers (4) eine in axialer Richtung verlaufende Nut (44) ausgebildet ist, in welche ein Stift zur Bildung des Nockens (48) einsetzbar ist, der im eingesetzten Zustand über die Mantelfläche des Futterkörpers (4) in radialer Richtung vorsteht.

4. Bohrfutter nach Anspruch 1, 2 oder 3, dadurch gekennzeichnet, daß das futterkörperseitige Ende der Feder (38) an einer mit dem Futterkörper (4) drehfesten Ringscheibe (40) angeordnet ist.

5. Bohrfutter nach Anspruch 4, dadurch gekennzeichnet, daß die das Widerlager für das futterkörperseitige Ende der Feder (38) bildende Ringscheibe (40) eine zu ihrer inneren Öffnung randoffene Aussparung aufweist, in die der Nocken (48) im wesentlichen spielfrei eingreift und dadurch eine drehfeste Kopplung zwischen Ringscheibe (40) und Futterkörper (4) bewirkt.

6. Bohrfutter nach einem der vorstehenden Ansprüche, dadurch gekennzeichnet, daß die Feder (38) eine Drehfeder mit in axialer Richtung verlaufender Federlängsachse ist, welche den Schaft (34) des Futterkörpers (4) konzentrisch umgibt.

7. Bohrfutter nach einem der vorstehenden Ansprüche, dadurch gekennzeichnet, daß die Stellscheibe (20) eine in axialer Richtung abgebogene Lasche (36) zur Ausbildung des Widerlagers für das sperrhülsenseitige Ende der Feder (38) aufweist.

8. Bohrfutter nach einem der vorstehenden Ansprüche, dadurch gekennzeichnet, daß die Ringscheibe (40) eine in axialer Richtung abgebogene Lasche (42) zur Ausbildung des Widerlagers für das futterkörperseitige Ende der Feder (38) aufweist.

9. Bohrfutter nach einem der vorstehenden Ansprüche, dadurch gekennzeichnet, daß die Stellscheibe (20) zur Ausbildung der Drehmitnahme zu der Sperrhülse (16) an wenigstens einer Stelle in radialer Richtung nach innen abgeflacht (22) ist und daß die Sperrhülse (16) an ihrer Innenseite eine komplementär hierzu ausgeformte Gegenfläche aufweist.

10. Bohrfutter nach Anspruch 9, dadurch gekennzeichnet, daß in der abgeflachten (22) Randseite der Stellscheibe (20) eine randoffene in axialer Richtung verlaufende Aussparung (24) ausgebildet ist, in welche ein in der Gegenfläche der Sperrhülse (16) gelagerter Mitnahmestift (26) eingreift.

11. Bohrfutter nach einem der vorstehenden Ansprüche, dadurch gekennzeichnet, daß die Stellscheibe (20) einen flanschartig in axialer Richtung abgebogenen Randbereich (30) aufweist.

12. Bohrfutter nach einem der vorstehenden Ansprüche, dadurch gekennzeichnet, daß die Sperrhülse (16) in wenigstens einer ihrer axialen Endpositionen verrastbar ist.

13. Bohrfutter nach Anspruch 12, dadurch gekennzeichnet, daß für die Verrastung wenigstens eine Kugelraste (56) vorgesehen ist.

14. Bohrfutter nach Anspruch 13, dadurch gekennzeichnet, daß die Stellscheibe (20) Anschlagflächen bzw. Aufgleitflächen (62, 64) für die in einer Wandung der Sperrhülse (16) federnd vorgespannte Kugelraste (56) aufweist.

15. Bohrfutter nach einem der vorstehenden Ansprüche, dadurch gekennzeichnet, daß die Stellscheibe (20) aus Metall oder aus einem Sinterwerkstoff besteht.

16. Bohrfutter nach einem der vorstehenden Ansprüche, dadurch gekennzeichnet, daß die Ringscheibe (40) aus Metall oder einem Sinterwerkstoff besteht.

17. Bohrfutter nach einem der vorstehenden Ansprüche, dadurch gekennzeichnet, daß die Widerlager für die Feder (38) aus Metall oder einem Sinterwerkstoff bestehen.
